# EUROPÄISCHE PATENTSCHRIFT

(11) **EP 1 627 014 B1**
(45) Veröffentlichungstag und Bekanntmachung des Hinweises auf die Patenterteilung: **20.06.2007**
(21) Anmeldenummer: 05700343.6
(22) Anmeldetag: 31.01.2005
(51) Int. Cl.: C08L 23/04, C08L 23/10, C08L 17/00, C08L 21/00

(54) **GUMMIMEHL-ENTHALTENDE ELASTOMERLEGIERUNGEN**
ELASTOMER ALLOYS CONTAINING RUBBER FLOUR
MELANGES D' LASTOMERES CONTENANT DE LA POUDRE DE CAOUTCHOUC

(30) Priorität: 29.01.2004 CH 123042004
(43) Veröffentlichungstag der Anmeldung: 22.02.2006
(73) Patentinhaber: Kölbl Engineering und Consulting GmbH, 47475 Kamp-Lintfort (DE)
(72) Erfinder: KÖLBL, Herbert, 47475 Kamp-Lintfort (DE); DITTES, Peter, CH-8635 Dürnten (CH)
(74) Vertreter: Schneider Feldmann AG Patent- und Markenanwälte
(86) Internationale Anmeldenummer: PCT/CH2005/000048
(87) Internationale Veröffentlichungsnummer: WO 2005/073307

(56) Entgegenhaltungen:
- EP-A- 0 360 475
- EP-A- 0 547 843
- EP-A- 0 760 385
- EP-A- 1 340 782
- DE-A1- 4 425 944
- US-A- 4 713 419
- US-A- 5 010 122
- US-A- 5 198 497
- US-A- 5 359 007
- US-B1- 6 207 752

## Beschreibung

Die vorliegende Erfindung betrifft Gummimehl-enthaltende Elastomerlegierungen (Elastomeric Alloys; EAs), ein Verfahren zur Herstellung solcher Elastomerlegierungen und aus diesen Elastomerlegierungen hergestellte technische Halb- und Fertigfabrikate. Die Elastomerlegierungen sind TPE (thermoplastischen Elastomeren)-ähnliche Compounds, die Gummimehl enthalten, das vorzugsweise aus Altreifen oder aus Produktionsabfällen, die bei der Kautschukverarbeitung anfallen, stammt. Die EAs ermöglichen somit eine ökologisch und ökonomisch sinnvolle Wiederverwertung dieser Problemabfälle. Durch staatliche Auflagen sind zum Beispiel Automobilhersteller verpflichtet worden die Recyclingquoten von Altfahrzeugen zu erhöhen, was noch zusätzliche Anreize schafft um Altreifen der Wiederverwertung zuzuführen. Es sind verschiedene Verfahren zum Herstellen von Gummimehl aus Altreifen bekannt, wobei es für die vorliegende Erfindung entscheidend ist, dass das Gummimehl nicht nur auf Partikelgrössen von 100 bis 600 µm, vorzugsweise 300 bis 450 µm zerkleinert wird, sondern dass es auch im wesentlichen frei ist von Rückständen textiler oder metallischer Verstärkungsmaterialien. Es sind verschiedene Verfahren zum Rezyklieren von Altreifen und zum Herstellen von Gummimehl bekannt. In Versuchsreihen hat sich gezeigt, dass die Feinheit des Gummimehls und seine Herstellung grossen Einfluss auf die Eigenschaften der erfindungsgemässen Compounds und damit auch auf die der Halb- und Fertigprodukte haben.

In der EP-A-0'482'723 ist zum Beispiel eine Anlage und ein Verfahren zum Zerkleinern von Gummi, insbesondere von Altgummi, Altreifen, Gummiteilen und Gummiabfällen beschreiben. Gummi als ausvulkanisierter Kautschuk wird durch Erhitzen nicht plastifiziert sondern verkohlt. Der elastische Altgummi der zu zerkleinernden Altreifen wird mit Hilfe von flüssigem Stickstoff auf sehr tiefe Temperaturen, ca. -140°C unterkühlt, wodurch er bis in die Kernzonen versprödet und dann gemahlen werden kann. Versuche der Anmelder haben gezeigt, dass solche in einem Kaltmahlverfahren hergestellten Gummimehle vorteilhafte Verarbeitungs- und Produkteigenschaften aufweisen.

In der DE 19607281, welche ein Verfahren zum Herstellen von TPE-ähnlichen, Gummimehl-enthaltenden Compounds offenbart, wird hingegen aufgrund der sich ergebenden günstigen Oberflächenstrukturen des Gummimehlkorns das Warmvermahlungsverfahren favorisiert. Die Compounds gemäss der DE 19607281 werden in einem beobachtungsabhängig gesteuerten Mischprozess aus Alt- und Abfallgummimehl sowie Polypropylen als Thermoplast unter Zugabe von Vernetzungsmitteln in einem Mischprozess im Innenmischer compoundiert und dabei gleichzeitig dynamisch stabilisiert. Es werden Verfahren und Rezepturen beschrieben, nach denen sich Compounds herstellen lassen, die sich durch ein zum bekannten technischen Stand bemerkenswert verbessertes, insbesondere mechanischphysikalisches Werkstoffkennwerteniveau auszeichnen. Das Verfahren beruht darauf, dass das Gemisch aus mindestens zwei an sich unverträglichen Mischungsbestandteilen, Gummimehl und Thermoplast, durch Schaffung entsprechender stofflicher, technologischer und konstruktiver Voraussetzungen während des Schmelzemischprozesses in ein Compound mit schlagzähen Eigenschaften überführt wird. Dazu wird unbehandeltes und/oder aktiviertes Alt- oder Abfallgummimehl und Polypropylen (PP) als Thermoplastkomponente einem Innenmischer zugeführt, das PP wird plastifiziert, während gleichzeitig das Gummimehl verteilt bzw. untergemischt wird. Durch Zusatz eines oder mehrerer Vernetzungsmittel in unterschiedlichen Masseverhältnissen unter Einwirkung hoher Scherkräfte erfolgt die dynamische Stabilisierung der Elastomer- und/oder der Thermoplastkomponente und die Verarbeitung zu Compounds welche Eigenschaften ähnlich wie Thermoplastische Elastomere aufweisen. Bereits in der DE 19923758 wurde erkannt, dass eine homogene Verteilung des Vernetzungsmittels im Verfahren gemäss der DE 19607281 nicht gewährleistet ist und dadurch eine stabile Reproduzierbarkeit qualitativ gleichwertiger Compounds über einen langen Zeitraum hinweg nicht gegeben ist. Es hatte sich außerdem gezeigt, dass im Verfahren gemäss der DE 19607281 nicht jedes thermoplastische Material gleichermaßen gut geeignet ist, qualitativ hochwertige und mehrfach recycelbare Compounds herzustellen, da der erreichbare Vernetzungsgrad der thermodynamisch unverträglichen Komponenten sehr unterschiedlich ist.

In der DE 19923758 wird daher vorgeschlagen das Gemisch aus zwei an sich unverträglichen Phasen, Gummimehl und Thermoplast, durch geeignete Materialwahl für die Thermoplastkomponente und weitere Zusatzstoffe und durch eine verbesserte Technologie des Verfahrensablaufes während einer relativ kurzen Mischzeit im Schmelzemischprozess in eine Legierung mit TPE-ähnlichen Eigenschaften zu überführen. Dazu wird wenigstens ein Polypropylen-Co-Polymerisat oder ein Gemisch davon mit wenigstens einem Polypropylen-Typen im Mischaggregat aufgeschmolzen und danach der Schmelze dosiert Gummimehl, von dem zumindest ein Teil in einem Radikaldonator vorgequollen worden ist, zugegeben. Das Gummimehl wird durch Aufbringen hoher Scherdeformationen und unter mischparameterabhängigem Zusatz radikalbildender Agenzien zur Phasenkopplung zwischen dem Gummimehl und dem Polypropylen-Co-Polymerisat oder dessen Gemisches in der Kunststoffmatrix dispergiert wird und der dynamische Stabilisierungsprozess erfolgt bei einer Mischguttemperatur, die oberhalb des Schmelztemperaturbereiches des Polypropylen-Co-Polymerisats, aber unterhalb des Zersetzungstemperaturbereiches des Gummimehls liegt und bei einer Mischzeit, die eine Reaktion des Radikalbildners ermöglicht. Das Schmelzemischen mit dynamischer Stabilisation der Zwischenphase wird in der DE 19923758 als ein Weg beschrieben, um Elastomerlegierungen (Elastomeric Alloys; EA) aus Gummimehl herzustellen deren Eigenschaften denen der thermoplastischen Elastomere (TPE) nahe kommen.

US 5,359,007 zeigt eine Methode zur Herstellung eines thermoplastischen Gummis, bei welchem ein Gummirohmaterial, welches Altreifen, Gummiabfälle und andere Gummiprodukte umfassen kann, chemisch oder physikalisch devulkanisiert und zermahlen wird. Anschliessend wird mit einem thermoplastischen Polymer (Polyolefin oder PVC) und einem Dispergierungsmittel eine Elastomerlegierung hergestellt. Mittels eines Härters wird der Vernetzungsgrad eingestellt.

US 5,010,122 zeigt eine Elastomerlegierung bestehend aus Gummimehl und thermoplastischem Polymermaterial, wobei das thermoplastische Polymermaterial Ethylen-Vinylacetat enthalten kann. Das Gummimehl kann aus Altreifen oder Gummiabfällen hergestellt sein, ist bevorzugt nicht devulkanisiert, und weist eine Partikelgrössenverteilung zwischen minimal ca. 600 µm (Mesh 30) und maximal ca. 2 mm (Mesh 10) auf. Sowohl das Gummimehl als auch das thermoplastische Material werden bevorzugt vor der Herstellung der Elastomerlegierung in einem Rührwerk mit einem Kopplungsmittel behandelt. Im Falle des Gummimehls ist dies 3-Mercaptopropyltrimethoxysilan.

Obwohl die in den zitierten Publikationen beschriebenen Verfahren zur Herstellung von Elastomerlegierungen oder Gummimehl-enthaltenden TPE-ähnlichen Compounds und die damit hergestellten Produkte entscheidende Verbesserungen mit sich gebracht haben, sind vor allem in Hinblick auf die Herstellungsverfahren, die Herstellungskosten und die Materialeigenschaften dieser TPE-ähnlichen Compounds viele Probleme noch nicht befriedigend gelöst. Dies schlägt sich in der immer noch sehr geringen Marktakzeptanz dieser Gummimehl-enthaltenden Halb- und Fertigfabrikate nieder und bedarf dringend neuer Lösungen. Thermoplastischen Elastomere zeigen derzeit die größten Zuwachsraten aller Polymergruppen. Der Bedarf an neuen Werkstoffen und Herstellungsverfahren innerhalb dieser Gruppe, die spezifische Anforderungsprofile erfüllen und zudem kostengünstig und umweltfreundlich sind, ist bei weitem noch nicht gedeckt. Die Elastomerlegierungen oder Compounds können zudem auch in den Stoffgruppen der Thermoplaste und der Elastomere substituierend wirken. Es ist daher Aufgabe der vorliegenden Erfindung neue Elastomerlegierungen und neue Herstellungsverfahren für solche Elastomerlegierungen zur Verfügung zu stellen, die einfach herstellbar und durch gezielte Auswahl der Materialien sehr kostengünstig sind. Die neuen Compounds sind analog zu den TPEs recyclingfähig und lassen sich je nach Bedarf in spritzgussfähiger, extrudierbarer oder kalandrierbarer Einstellung liefern.

Diese Aufgabe wird durch Elastomerlegierungen (EAs) gemäss Anspruch 1, Halb- und Fertigfabrikate hergestellt aus diesen EAs gemäss Anspruch 15 und einem Herstellungsverfahren gemäss Anspruch 16 gelöst.

Es ist eine weitere Aufgabe neue Compounds zur Verfügung zu stellen, die annähernd eine lineare Hysterese erreichen, mit einer hohen Dehnbarkeit und hoher Zugfestigkeit.

Die neuen Elastomerlegierungen (EAs) umfassen Gummimehl, ein Hauptthermoplast, vorzugsweise Polyethylen (PE) oder Polyurethan (PUR), ein Dispergierungsmittel oder einen Emulgator (vorzugsweise EVA) und nach Bedarf Additive zum ausgleichen der durch das Gummimehl beeinträchtigten physikalischen Eigenschaften der EA.

Im Folgenden werden Ausführungsbeispiele der Erfindung beschrieben und anhand der beiliegenden Zeichnungen werden ausgewählte Beispiele zusätzlich charakterisiert. Es zeigen:

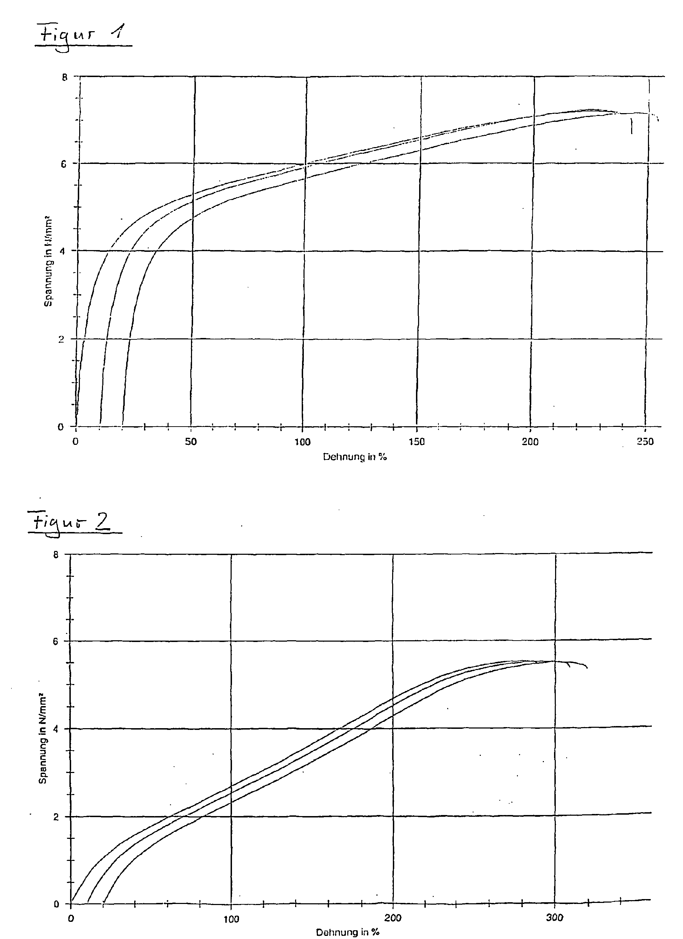

Figur 1 das Verhalten eines ersten Compounds im Zugversuch, und
Figur 2 das Verhalten eines zweiten Compounds im Zugversuch,
wobei die Kurven für jeweils drei Werkstücke dargestellt sind.

Die erfindungsgemässen Compounds enthalten mindestens 30 bis maximal 60%, vorzugsweise über 50%, Gummimehl aus Altreifen oder Gummiabfällen verschiedensten Ursprungs einerseits und Thermoplaste und/oder deren Gemische als Kunststoffmatrix. Das Gummimehl ist vorzugsweise mittels eines cryogenen Aufbereitungsverfahrens hergestellt, das nach der Anmelderin als KEC-Verfahren bezeichnet wird. Kern dieses Verfahrens ist die wirtschaftliche Wiedergewinnung der verschiedenen Reifenbestandteile insbesondere zur Herstellung von Gummigranulat. Mit einer KEC Aufbereitungsanlage werden dabei die Altreifen nach dem Prinzip der cryogenen Granulierung mit nachgeschalteter Feinvermahlung unter Verwendung bekannter Maschinen und technischer Vorrichtungen zu Gummimehl verarbeitet. Die Fraktionsgrösse von vorzugsweise 100 bis 600 µm konnte bisher in bekannten konventionellen Anlagen nur in geringem Umfang hergestellt werden.

Die im Reifen enthaltenen Stahl- und/oder Gewebeanteile werden mehrstufig abgesondert, um ein hochreines Gummimehl für die folgenden Verarbeitungswege bereitzustellen. Gemäss einer vorteilhaften Ausführungsform der vorliegenden Erfindung werden die Compounds durch aufbereitete Fasern aus dem derart gewonnene Gewebe verstärkt.

Bei der Granulierung der Altreifen und der Trennung von Stahl und Gewebe werden folgende Teilstufen durchlaufen:
- Aufgabe der Altreifen
- Vorzerkleinerung
- Cryogenstufe
- Granulierung
- Feinvermahlung
- Reinigung
- ggf. Abpackung und Lagerung

Die Aufgabe der Reifen erfolgt über einen Bunker, der mit Hilfe eines Radladers beschickt wird. Ein Reifenvereinzeler stellt dabei die serielle Zuführung zur ersten Zerkleinerungsstufe sicher. Über einen Gurtförderer gelangen die Reifen in einen Spezial-Shredder, in dem sie durch zwei gegenläufige Rotoren in etwa handtellergroße Stücke zerkleinert werden. Durch ein nachgeschaltetes Entwässerungssieb wird dem Material das anhaftende Wasser entzogen, welches sich bei der Lagerung im Reifen angesammelt hat. Die so in Stücke geteilten Reifen werden über einen weiteren Gurtförderer zu einem Fallschacht transportiert. Dort erfolgt die Zuführung zu einem Drehrohrkühler, wobei das Material zunächst eine Schleuse aus hochabdichtenden Doppelpendelklappen passiert. Diese dienen in erster Linie zur Reduktion des Verbrauchs des eingesetzten Stickstoffs, der als Kühlmedium genutzt wird. Der Drehrohrkühler ist eine kälteisolierte Trommel, durch die die Reifensegmente infolge einer Rotationsbewegung in die Auslaufrichtung gefördert werden. An ihrem Auslauf wird flüssiger Stickstoff mit einer Siedetemperatur von -196°C auf das Material gesprüht. Durch das Abkühlen auf mindestens -80°C mittlerer Reifentemperatur werden die Reifensegmente versprödet.

Der verwendete Stickstoff wird am Eingang des Drehrohrkühlers abgesaugt und zur Vorkühlung der Reifenfragmente genutzt.

Nach Verlassen des Drehrohrkühlers gelangen die gefrorenen Reifenstücke durch eine weitere Schleuse aus Doppelpendelklappen in eine Hammermühle. Hier wird das tiefgefrorene Gummi von den Gewebe- und Stahleinlagen abgeschlagen und granuliert.

Das so zerkleinerte Material wird zur Fe-Abscheidung und zum Gewebeaustrag weitertransportiert. Die Fe-Separierung erfolgt über einen Magnetabscheider und eine Permanentmagnettrommel.

Zur Ausscheidung des Gewebes wird das Material in eine vierstufige schwingende Sichterförderrinne geleitet, wo Gummigranulat und Gewebe im Fliessbettsystem getrennt werden. Dabei wird durch einen unterseitigen Luftstrom der spezifisch leichtere Gewebeanteil nach oben ausgetragen,

Anschliessend wird das Granulat zur Fe-Nachreinigung über eine zweite Permanentmagnettrommel geleitet und gelangt von dort mittels eines Trogkettenförderers zu einem Taumelsieb.

Hier wird das gereinigte Granulat in die gewünschten Einzelfraktionen zwischen 0-8 mm getrennt. Die Einzelkörnungen werden über Abzugsschnecken in einen Vorratsbunker gefördert, von wo die versandfertige Abpackung in Big-Bags erfolgt bzw. für die einzelnen Weiterverarbeitungsstufen abgezogen werden können.

Die Granulatfraktionen werden bei Bedarf durch die Feinvermahlung im Prallreaktor bis zu Gummimehl weiterverarbeitet.

Dabei wird das grobe Mahlgut mit einem Luftstrom in die Maschine gesaugt, wo es durch eine Folge von Wirbelkammern wandert. Dort prallen die einzelnen Granulatkörner durch eine gezielte Luftverwirbelung immer wieder aufeinander, wodurch sie sich selbst gegenseitig schonend zerkleinern.

Die durch die Friktion entstehende Wärme wird von der Luft als Trägermaterial gleichmässig verteilt und abgekühlt.

Gleichzeitig wird Feuchtigkeit verdampft und so dem Granulat entzogen. Nach dem Austrag aus dem Prallreaktor verhindert die Separation von Luftstrom und Gummimehl in einem Abscheiderzyklon eine erneute Kondensation der Feuchtigkeit im Mahlgut.

Um eine optimale Reinheit der Abluft zu gewährleisten und gleichzeitig die Zurückgewinnung der Feinstanteile zu gewährleisten, wird dem Zyklon eine Filteranlage nachgeschaltet.

Um die Leistung des Prallreaktors hinsichtlich des Durchsatzes und der Verarbeitungskapazität zu erhöhen, kann auch hier das Inputmaterial vor der Verarbeitung versprödet werden. Dabei wird das Granulat in einer Wirbelstromschnecke wie in der ersten Verarbeitungsstufe unter Einsatz von Stickstoff gekühlt und in diesem Zustand dem Prallreaktor zugeleitet.

Das nachvermahlene Granulat ist sehr homogen und zeichnet sich durch einen hohen Reinheitsgrad, eine grosse Oberfläche und eine validierte Qualität aus.

Die Fe-Bestandteile (Drähte) aus hochwertigen Stahllegierungen werden in Containern gelagert und können als Schrott weiterverkauft werden. Durch Verdichtung kann er einem Hochofen zugeführt werden.

Eine Aufbereitung des Gewebes gilt aus wirtschaftlichen Gründen bisher nicht empfehlenswert. Da es sich gut für die Verbrennung eignet wird es daher üblicherweise auf diesem Wege entsorgt. In einer weiteren bevorzugten Ausführungsform der vorliegenden Erfindung wird vorgeschlagen das beim Rezyklieren der Altreifen anfallende Fasermaterial als Verstärkungshilfsstoff einzusetzen. Dadurch ist der Rezyklierkreislauf komplett geschlossen und alle Bestandteile der Altreifen können der Wiederverwertung zugeführt werden.

Als Dispergierungsmittel oder Emulgator werden vorzugsweise Ethylen-Vinylacetat-Copolymer (EVA) oder PE-Copolymere wie Ethylen / Butylacrylat - Copolymere (EBA) oder Ethylen-Methylmethacrylat-Copolymere (EMA) oder PE-Terpolymere wie Glycidil-methacrylat (GMA) oder Maleinsäureanhydride (MAH, Maleic Anhydride) eingesetzt, wie sie zum Beispiel von der ATOFINA DEUTSCHLAND GmbH, Düsseldorf vertreiben werden. Die EVAs sind mit bis zu 20% Vinylacetat dem Polyethylen niedriger Dichte ähnlich und mit 20 bis 40 % Vinylacetat kautschukartig, aber thermoplastisch verarbeitbar. Den erfindungsgemässen Compounds werden nach Bedarf noch Additive und Füllstoffe zugegeben, die zum Beispiel zur Vernetzung und zum Erreichen spezifischer Verarbeitungsparameter dienen. In Abhängigkeit der Gummimehlqualität und Auswahl der Thermoplasten und Additiven können Chemiewerkstoffe nach Mass gefertigt und dem jeweiligen Anwendungsgebiet angepasst werden.

Die neuen Elastomerlegierungen zeichnen sich durch folgende Eigenschaftsbilder aus, die von der Eidgenössischen Materialprüfungs- und Forschungsanstalt (EMPA) gemäss EN ISO 527 an Prüfkörpern gemäss EN ISO Typ IB unter Normalklima 23/50 SN-ISO 291, ermittelt worden sind. Ausgewertet worden sind : E-Modul, max. Spannung, Dehnung bei max. Spannung, Bruchdehnung, Bruchspannung.
- E- Modul von 5 bis 350 N/mm²
- Knick, Abflachung
   Spannung von 1 bis 7 N/mm²
   Dehnung von 3 bis 30 %
- Maximalkraft
   Spannung von 3 bis 8,1 N/mm²
   Dehnung von 11 bis 380 %

Der Einsatz von EVA führt zu preislich sehr günstigen Produkten. Zugabe von EVA, mit denen sich das Gummimehl sehr gut benetzen lässt, wirkt sich auch sehr positiv auf die Materialeigenschaften aus und führt zu homogenen kompakten Eigenschaften der EAs.

Die Zugabe von Polyurethan (PUR) führt zu hoher Dehnbarkeit und hoher Zugfestigkeit. PUR kann sowohl Hauptthermoplast, als auch Additiv sein.

Die Zugfestigkeit der aus den neuen EAs hergestellten Produkte lässt sich durch Zugabe von Peroxiden (Vernetzungsmittel) bei der Compoundierung erhöhen.

Gummimehl aus Altreifen ist an sich schon sehr gut stabilisiert. Im Gegensatz dazu ist Latexschaum aus alten Matratzen lichtempfindlich, sauerstoffempfindlich und muss erst noch stabilisiert werden.

Erfindungsgemässe Compounds, bei denen Gummimehl aus Altreifen eingesetzt werden, sind zwangsläufig immer schwarz. Für andere Farben muss Gummimehl aus nicht schwarzem Ausgangsmaterial, zum Beispiel aus Latexschaum eingesetzt werden, dem entsprechende Farbstoffe, Licht- und Sauerstoffstabilisatoren zugesetzt werden können.

Zugabe von PVC als Hauptthermoplast führt zu Viskoelastizität.

Vorteil des neuen Materials: es treten auch bei starker mechanischer Beanspruchung (Biegen, Dehnen) keine Gummipartikel aus den EAs und damit aus den erfindungsgemässen Halb- und Fertigfabrikaten aus.

Das Preis-Leistungs-Verhältnis der nach dem erfindungsgemäßen Verfahren hergestellten Compounds übertrifft das der von auf dem Markt angebotenen vergleichbaren reinen TPEs oder schlagzähen Thermoplasten.

Die Elastomerlegierungen können bei Bedarf mit einer flammhemmenden, elektrisch leitenden, antimikrobiellen, antioxidanten, schlagfesten Einstellung hergestellt werden. Die oben genannten Eigenschaften, können dem Endanforderungsprofil entsprechend, innerhalb breiter Bereiche eingestellt werden.

Die erfindungsgemässen Compounds können auf allen gängigen Kunststoffverarbeitungsmaschinen verformt werden.

### AUSFÜHRUNGSBEISPIELE

### Beispiel 1 (Anmeldercode PE-GRG 1)

Diese EA oder Compound ist aufgebaut auf Gummimehl, PE und anderen Thermoplasten und zeichnet sich vor allem durch seine hohe Dehnung, gute Tieftemperaturbeständigkeit, gute Spannungsfestigkeit, Zähigkeit, Formstabilität und gute Verarbeitbarkeit aus. Das Preis/ Leistungsverhältnis bei diesem Compound ist sehr gut. Das Produkt ist thermisch verschweissbar. Als Anwendungsgebiete eignen sich besonders die Rohr- und Profilextrusion, Tiefziehprodukte und grosse Spritzgussteile für die Automobilindustrie, wie Spritzschutzkästen und Maschinengehäuse.

| REZEPTUR 1 | Anteil in % |
|---|---|
| Gummimehl | 50.00 |
| Greenflex^{®} HN-70 | 20.00 |
| (EVA; Ethylen-Vinylacetat-Copolymer) | |
| Rigidex HD 3840 | 30.00 |
| (HDPE; High-density polyethylene) | |

Das eingesetzte Gummimehl weist vorzugsweise Partikelgrössen von 250 bis 450 µm, vorzugsweise um die 380 µm auf. Hergestellt ist es vorzugsweise nach dem oben bereits beschriebenen Verfahren mit cryogener Granulierung und nachgeschalteter Feinvermahlung.

Greenflex^{®} ist ein Ethylen-Vinylacetat-Copolymer. Das in der Rezeptur 1 bevorzugte EVA Greenflex^{®} HN-70 weist einen MELT FLOW INDEX (MFI 190°C/2,16 kg) von 6 g/10min und einen Vinylacetat-Gehalt von 28% auf.

Rigidex^{®} ist der BP CHEMICALS EQUIVALENT PRODUCTS NAME einer Produktgruppe von Polyolefinen der Firma BP Solvay Polyethylene. Das bevorzugte HDPE Produkt weist einen MELT FLOW INDEX (MFI 190°C/2,16 kg) von 4 g/10min und eine Dichte von 0.938 g/cm3 auf.

Die Compounds werden vorzugsweise kontinuierlich auf einem speziell eingerichteten Ein- oder Zweischneckenextruder, zum Beispiel einer Buss-Knetmaschine, wie sie von der Firma Polyplast Müller GmbH, An der Bleiche 48, D-47638 Straele angeboten wird, hergestellt. Die Buss-Knetmaschine ist ein spezieller Einschneckenextruder oder Knetextruder mit einer Schnecke, die pro Umdrehung durch drei Spalten unterbrochen wird. In der Trommel sind drei Stangen mit Knetabstreifern angeordnet. Im Gegensatz zu normalen Extrudern ist der Drehbewegung eine axiale oszillierende Bewegung überlagert.

Nach jeder Bewegung um 120° wird die Schnecke horizontal hin und her bewegt. Wenn die Knetabstreifer die Spalte passieren, wird das Material teilweise nach vorn und wieder zurück bewegt. Nach jeder vollen Umdrehung werden alle vier Flanken der Knetflügel durch die Knetabstreifer gereinigt. Dadurch ergeben sich nur kurze Verarbeitungslängen, wenn für eine gute Dispersion nur geringe Wärmebelastung erforderlich ist. Je nach Kunststoff wird in Temperaturbereichen von 170 bis 300 °C gearbeitet. Im vorliegenden Beispiel 1 wird vorzugsweise im Temperaturbereich um die 190 °C gearbeitet. Die Komponenten werden über spezielle Beschickungseinrichtungen über Waagen kontinuierlich in den Kneter dosiert. Ein wesentlicher Vorteil des vorliegenden Verfahrens liegt darin, dass die Herstellung der Elastomerlegierung unter Verwendung von Gummimehl kontinuierlich und nicht "batch"-weise erfolgt, so dass es sich in einer Linie mit der Gummimehlfertigung, vorzugsweise nach dem vorgenannten Prinzip der Anmelderin, integrieren lässt.

Als weiterer optionaler Zusatzstoff kann, speziell bei Polyolefinen Vanfre^{®} VAM (Polyoxyethylen octadecyl ether phosphat; Poly(oxy-1,2-ethandiyl),alpha-octadecyl-omega-hydroxy, phosphat) welches zum Beispiel von der Firma R.T. VANDERBILT COMPANY, INC., 30 WINFIELD STREET, NORWALK, CT 06855 angeboten wird, als Additiv zur Verbesserung der Oberflächen in einer Dosierung von 0.5 bis 1% eingesetzt werden. Weitere mögliche Additive sind Antioxidatien, Hydrolyseschutzmittel, Vernetzer oder leitfähiger Russ.

Basierend auf der Prüfnorm ISO 572-2 wurden für den nach der Rezeptur 1 hergestellten Compound 1 folgende Werte ermittelt:

| | |
|---|---|
| E- Modul: | 71 N/mm² |

### Knick, Abflachung

| | |
|---|---|
| Spannung: | ca. 4 N/mm |
| Dehnung: | ca. 20% |

### Maximalkraft

| | |
|---|---|
| Spannung: | 7,2 N/mm2 |
| Dehnung: | 220 % |

### Prüfparameter:

| | |
|---|---|
| Vorkraft: | 1 N |
| Beginn E-Modulermittlung: | 0.2 % |
| Prüfgeschwindigkeit: | 50 mm/min |
| Ende E-Modulermittlüng: | 1 % |

**Tabelle 1: Prüfergebnisse Compound 1:**

| Nr | E z | *σ* bei ε 50% | σ bei Fmax | ε bei Fmax | σ Bruch | ε Bruch | I o | Dicke | Breite |
|---|---|---|---|---|---|---|---|---|---|
| | N/mm² | N/mm² | N/mm² | % | N/mm² | % | mm | mm | mm |
| 1 | 66.79 | 5.30 | 7.19 | 226 | 6.67 | 242 | 49.6 | 3.95 | 9.98 |
| 2 | 77.48 | 5.33 | 7.22 | 214 | 7.09 | 225 | 50.1 | 3.96 | 9.96 |
| 3 | 68.73 | 5.22 | 7.15 | 225 | 6.97 | 234 | 49.7 | 3.93 | 9.98 |
| | | | | | | | | | |
| Statistik: | | | | | | | | | |
| | | | | | | | | | |
| N=3 | E z | σ bei ε 50% | σ bei Fmax | ε bei Fmax | σ Bruch | ε Bruch | I o | Dicke | Breite |
| | N/mm² | N/mm² | N/mm² | % | N/mm² | % | mm | mm | mm |
| Ø | 71.00 | 5.29 | 7.19 | 222 | .6.91 | 234 | 49.8 | 3.95 | 9.97 |
| s | 5.70 | 0.06 | 0.04 | 7 | 0.22 | 9 | 0.2 | 0.02 | 0.01 |
| min | 66.79 | 5.22 | 7.15 | 214 | 6.67 | 225 | 49.6 | 3.93 | 9.96 |
| max | 77.48 | 5.33 | 7.22 | 216 | 7.09 | 242 | 50.1 | 3.96 | 9.98 |

### Beispiel 2 (Anmeldercode PU-GRG 4)

Diese EA oder Compound ist aufgebaut auf Gummimehl, PUR und einem Blend von weiteren Thermoplasten und Additiven und zeichnet sich durch eine hohe Flexibilität, Elastizität und Dehnung aus. Die Kraft/Weg-Kurve verläuft flach.

Das Produkt ist verklebbar. Diese Compounds eignen sich besonders für Dichtungsprofile für die Bau- und Automobilindustrie und zur Herstellung hochflexibler Rohre

| REZEPTUR 2 | Anteil in % |
|---|---|
| Gummimehl | 59.5 |
| Greenflex^{®} HN-70 | 20.00 |
| (EVA; Ethylen-Vinylacetat-Copolymer) | |
| Perkadox 1440 | 0.5 |
| Pellethane 2103 | 20.00 |

Das Gummimehl liegt bevorzugt in einer Qualität vor, wie sie bereits im Beispiel 1 beschrieben ist.

Greenflex^{®} ist ein Ethylen-Vinylacetat-Copolymer. Das in der Rezeptur 1 bevorzugte EVA Greenflex^{®} HN-70 weist einen MELT FLOW INDEX (MFI 190°C/2,16 kg) von 6 g/10min und einen Vinylacetat-Gehalt von 28% auf.

Perkadox ist ein Di(tert-butylperoxyisopropyl)benzol der Firma Akzo Nobel, das als Radikaldonator eingesetzt wird und zu einer besseren Vernetzung führt.

Pellethane ist ein Polyether-basiertes thermoplastisches Polyurethan-Elastomer (TPE-U) mit einer bevorzugten Shore-Härte von 70A der Firma Dow Plastics, einer Geschäftseinheit von The Dow Chemical Company.

In weiteren bevorzugten Ausführungsformen der Erfindung werden als TPU Polyether- oder Polyesterpolyurethane eingesetzt. Die Shore-Härten liegen zwischen 70 Shore A und 72 Shore D, je nach Anwendungsgebiet. Die Polyetherpolyurethane werden bevorzugt bei Produkten mit einem Hydrolysenrisiko, Polyesterpolyurethane bei Produkten, die eine hohe Abreibfestigkeit bedingen, eingesetzt.

Die Compounds nach Beispiel 2 werden hergestellt wie es unter Beispiel 1 beschrieben ist. Vorzugsweise wird die Bearbeitungstemperatur jedoch um die 200 °C gewählt.

Basierend auf der Prüfnorm ISO 572-2 wurden für den nach der Rezeptur 2 hergestellten Compound 2 folgende Werte ermittelt:

| | |
|---|---|
| E- Modul: | 7.2 N/mm² |

### Knick, Abflachung

| | |
|---|---|
| Spannung: | ca. 1.5 N/mm |
| Dehnung: | ca. 20% |

### Maximalkraft

| | |
|---|---|
| Spannung: | 5.5 N/mm² |
| Dehnung: | 280 % |

### Prüfparameter:

| | |
|---|---|
| Vorkraft: | 1 N |
| Beginn E-Modulermittlung: | 0.2 % |
| Prüfgeschwindigkeit: | 50 mm/min |
| Ende E-Modulermittlung: | 0.6 % |

**Tabelle 2: Prüfergebnisse Compound 2:**

| Nr | E z | σ bei ε 50% | σ bei Fmax | ε bei Fmax | σ Bruch | ε Bruch | I o | Dicke | Breite |
|---|---|---|---|---|---|---|---|---|---|
| | N/mm² | N/mm² | N/mm² | % | N/mm² | % | mm | mm | mm |
| 1 | 7.57 | 1.79 | 5.54 | 282 | 5.46 | 289 | 50.4 | 4.22 | 9.73 |
| 2 | 7.97 | 1.81 | 5.53 | 282 | 5.37 | 299 | 50.4 | 4.29 | 9.72 |
| 3 | 5.93 | 1.77 | 5.51 | 283 | 5.35 | 299 | 50.5 | 4.25 | 9.75 |
| | | | | | | | | | |
| Statistik: | | | | | | | | | |
| | | | | | | | | | |
| N=3 | E z | σ bei ε 50% | σ bei Fmax | ε bei Fmax | σ Bruch | ε Bruch | I o | Dicke | Breite |
| | N/mm² | N/mm² | N/mm² | % | N/mm² | % | mm | mm | mm |
| Ø | 7.15 | 1.79 | 5.53 | 282 | 5.39 | 296 | 50.4 | 4.25 | 9.73 |
| s | 1.08 | 0.02 | 0.02 | 0 | 0.06 | 6 | 0.1 | 0.04 | 0.02 |
| min | 5.93 | 1.77 | 5.51 | 282 | 5.35 | 289 | 50.4 | 4.22 | 9.72 |
| max | 7.97 | 1.81 | 5.54 | 283 | 5.46 | 299 | 50.5 | 4.29 | 9.75 |

Compound 2 weist eine Shore A Härte von 69, eine Dichte von 1.09 und einen MFI von 4.12 auf (Bedingungen 210°C, 5.00 kg).

### Beispiel 3 (Anmeldercode PU-GRG 5)

| REZEPTUR 3 | Anteil in % |
|---|---|
| Gummimehl | 50 |
| Perkadox | 0.5 |
| Rigidex HD 3840 | 40 |
| (HDPE; High-density polyethylene) | |
| Greenflex^{®} HN-70 | 9.5 |
| (EVA; Ethylen-Vinylacetat-Copolymer) | |

Das Gummimehl liegt wiederum bevorzugt in einer Qualität vor, wie sie bereits für die Beispiele 1 und 2 beschrieben ist. Bevorzugtes Herstellungsverfahren und Angaben zu den Ausgangsprodukten entsprechen ebenfalls den oben genannten.

### Beispiel 4 (Anmeldercode PU-GRG 4.1)

Dieses Compound, aufgebaut auf Gummimehl, PUR, Additiven und Ethylen/Butylacrylat-Copolymer (EBA) als Emulgator, zeichnet sich durch seine sehr hohe Dehnung, gute Zugfestigkeit sehr hohe Elastizität und Flexibilität aus.

| REZEPTUR 4 | Anteil in % |
|---|---|
| Gummimehl | 59.5 |
| Perkadox | 0.5 |
| Pellethane | 30 |
| EBA | 10 |

Das Gummimehl liegt wiederum bevorzugt in einer Qualität vor, wie sie bereits für die Beispiele 1 bis 3 beschrieben ist. Bevorzugtes Herstellungsverfahren und Angaben zu den Ausgangsprodukten entsprechen ebenfalls den oben genannten.

Bei allen erfindungsgemässen Compounds kann Kalciumcarbonat zur Verbilligung der Produkte zugesetzt werden.

### Fasergefüllte Elastomerlegierungen mit verbesserter Zugfestigkeit

Den erfindungsgemässen Elastomerlegierungen wird gemäss einer weiteren vorteilhaften Ausführungsform der Erfindung Fasermaterial, wie zum Beispiel Glasfasern oder die beim Rezyklieren von Altreifen anfallenden Kunststoff- und/oder Textilfasern, zugegeben.

Es ist aus dem Stand der Technik bekannt, dass Thermoplaste mit Glasfaserpartikeln gefüllt werden um die Eigenschaften den spezifischen Anforderungen, welche an den Werkstoff gestellt werden, anzupassen.
Diese von Thermoplasten bekannte Glasfaserverstärkung kann auch bei den erfindungsgemässen Elastomerlegierungen angewendet werden. Als weitere Verstärkungshilfsstoffe können Textilfasern in losem, flausigem Zustand in den Gummimehl-Thermoplasten-Compound eingearbeitet werden.

Solche Textilfasern aus Polyester entstehen zum Beispiel als Nebenprodukt bei der Herstellung des Gummimehls aus Altreifen. Daraus ist ersichtlich, dass mit der Wiederverwendung des textilen Anteils aus dem Gummimehlherstellungsprozess eine hundertprozentige Verwendung der Altreifen gelungen ist.

### Technische Voraussetzungen

Um die Wirtschaftlichkeit sicherzustellen, erfolgt die Einarbeitung der Faserpartikel mittels eines kontinuierlichen Verfahrens. Die Fasern müssen vorzugsweise eine Länge von 0.5 bis 3mm haben. Die Compoundiertemperatur liegt je nach Kunststoff zwischen 180 und 230°C. Der Wassergehalt der Fasern liegt vorzugsweise unter 0.1% liegen. Der maximale Fasergehalt übersteigt vorzugsweise 30% nicht, wobei ein Gehalt um die 15% bevorzugt ist. Eine zur erfindungsgemässen Verstärkung geeignete Faserart sind Glasfasern. Es können zum Beispiel Fasern aus silanbeschichtem E-Glas eingesetzt werden, die beim Schwarzwälder Textilwerk unter der Typenbezeichnung Kurzschnitt E-Glas, Silan beschichtet, FGCS 35/40 in einer Länge von 3 mm erhältlich sind.
Wie bereits oben beschreiben, kommen auch bei den faserverstärkten Elastomerlegierungen als TPU Polyether- oder Polyesterpolyurethane zum Einsatz, deren Shore-Härten je nach Anwendungsgebiet der Compounds zwischen 70 Shore A und 72 Shore D liegen.

Grundsätzlich können alle erfindungsgemässen Elastomerlegierungen oder Gummimehl-Thermoplasten-Compounds mit Fasern verstärkt werden. Die Zugfestigkeit wird dadurch verbessert. Die Dehnung wird etwas reduziert, was durch gezielte Auswahl der Kunststoffkombinationen oder Additive jedoch ganz oder teilweise ausgeglichen werden kann.

### Beispiel 5 (Anmeldercode PP-GRG 8/20% GF)

| REZEPTUR 5 | Anteil in % |
|---|---|
| Gummimehl | 40 |
| Greenflex^{®} HN-70 | 8 |
| (EVA; Ethylen-Vinylacetat-Copolymer) | |
| Polypropylen (PP) | 24 |
| TPU (Pellethane 70 Shore A) | 8 |
| Glasfasern (GF) unter 2 mm Länge | 20 |

### Physikalische Eigenschaften:

| | ohne Glasfasern | mit Glasfasern |
|---|---|---|
| Spannung N/mm² | 5.8 | 8.0 |
| Dehnung % | 33 | 27 |
| Shore A | 93 | 95 |
| Shore D | 35 | 36 |
| Dichte g/cm³ | 1.04 | 1.07 |
| MFI | 8.4 | 8.2 |

### Beispiel 6 (Anmeldercode PU-GRG 4/16% GF)

| REZEPTUR 6 | Anteil in % |
|---|---|
| Gummimehl | 48 |
| Greenflex^{®} HN-70 | 16 |
| (EVA; Ethylen-Vinylacetat-Copolymer) | |
| Vernetzungsmittel | 0.4 |
| TPU (Pellethane 70 Shore A) | 16 |
| Glasfasern | 16 |

### Physikalische Eigenschaften:

| | ohne Glasfasern | mit Glasfasern |
|---|---|---|
| Spannung N/mm² | 5.5 | 9.1 |
| Dehnung % | 280 | 250 |
| Shore A | 69 | 71 |
| Shore D | - | - |
| Dichte g/cm³ | 1.09 | 1.13 |
| MFI | 4.12 | 4.0 |

### Beispiel 7 (Anmeldercode PU-GRG 4/16% Polyesterflausch)

| REZEPTUR 7 | Anteil in % |
|---|---|
| Gummimehl | 48 |
| Greenflex^{®} HN-70 | 16 |
| (EVA; Ethylen-Vinylacetat-Copolymer) | |
| Perkadox | 0.4 |
| TPU (Pellethane 70 Shore A) | 16 |
| Polyesterflausch | 16 |

### Physikalische Eigenschaften:

| | ohne Polyesterfasern | mit Polyesterfasern |
|---|---|---|
| Spannung N/mm2 | 5.5 | 8.7 |
| Dehnung % | 280 | 270 |
| Shore A | 69 | 71 |
| Shore D | - | - |
| Dichte g/cm³ | 1.09 | 1.1 |
| MFI | 4.12 | 3.95 |

In weiteren vorteilhaften Ausführungsformen der Erfindung werden den Elastomerlegierungen Fasern aus Keflar, Karbon oder natürliche Fasern aus Jute oder Baumwolle zugegeben.

## Patentansprüche

1. Thermoplastischen Elastomeren ähnliche Elastomerlegierung, welche aus Altreifen oder Gummiabfällen hergestelltes Gummimehl, ein Hauptthermoplast und ein Dispergierungsmittel oder einen Emulgator umfasst,
**dadurch gekennzeichnet, dass**
der Anteil des Gummimehls mindestens 30% bis maximal 60% beträgt,
das Gummimehl eine maximale Partikelgrösse von 600 µm aufweist,
und mittels eines Kaltmahlverfahrens hergestellt und nicht chemisch vorbehandelt ist.

2. Elastomerlegierung nach Anspruch 1, **dadurch gekennzeichnet, dass** der Hauptthermoplast aus der Gruppe der Polyethylene oder Polyurethane gewählt ist.

3. Elastomerlegierung nach Anspruch 1 oder 2, **dadurch gekennzeichnet, dass** der Hauptthermoplast ein wiederverwertetes Regranulat ist.

4. Elastomerlegierung nach einem der Ansprüche 1 bis 3, **dadurch gekennzeichnet, dass** der Hauptthermoplast einen Anteil von 20 bis 70 %, vorzugsweise von 30 bis 50 %, ausmacht.

5. Elastomerlegierung nach einem der Ansprüche 1 bis 4, **dadurch gekennzeichnet, dass** das Gummimehl einen Anteil von mehr als 50 %, ausmacht.

6. Elastomerlegierung nach einem der Ansprüche 1 bis 5, **dadurch gekennzeichnet, dass** das Gummimehl Partikelgrössen von 100 bis 600 µm, vorzugsweise 300 bis 450 µm aufweist.

7. Elastomerlegierung nach einem der Ansprüche 1 bis 5, **dadurch gekennzeichnet, dass** das Dispergierungsmittel oder der Emulgator aus der Gruppe Ethylen-Vinylacetat-Copolymer, PE-Copolymere wie Ethylen-Butylacrylat-Copolymere (EBA) oder Ethylen-Methylmethacrylat-Copolymere (EMA), PE-Terpolymere wie Glycidyl-Methacrylat (GMA) oder Maleinsäureanhydride (MAH) gewählt ist.

8. Elastomerlegierung nach Anspruch 6, **dadurch gekennzeichnet, dass** das Dispergierungsmittel oder der Emulgator einen Anteil von 10 bis 50%, vorzugsweise von 10 bis 20%, ausmacht.

9. Elastomerlegierung nach einem der vorhergehenden Ansprüche, **dadurch gekennzeichnet, dass** sie Additive zum Ausgleichen der durch das Gummimehl verschlechterten physikalischen und mechanischen Eigenschaften umfasst.

10. Elastomerlegierung nach einem der vorhergehenden Ansprüche, **dadurch gekennzeichnet, dass** die Elastomerlegierung Fasern in einem Anteil von bis zu 30%, vorzugsweise 15 bis 20% umfasst.

11. Elastomerlegierung nach Anspruch 10, **dadurch gekennzeichnet, dass** die Fasern aus der Gruppe: Glas-, Keflar-, Karbonfasern oder natürliche Fasern aus Jute oder Baumwolle oder Gemische davon ausgewählt sind.

12. Elastomerlegierung nach Anspruch 10, **dadurch gekennzeichnet, dass** die Fasern Polyesterflausch umfassen.

13. Elastomerlegierung nach Anspruch 11 oder 12, **dadurch gekennzeichnet, dass** die Fasern vorzugsweise in einer Länge von 0.5 bis 3mm vorliegen.

14. Elastomerlegierung nach einem der Ansprüche 11 bis 14, **dadurch gekennzeichnet, dass** der Wassergehalt der Fasern vorzugsweise unter 0.1 % liegt.

15. Halb- und Fertigfabrikate hergestellt aus Elastomerlegierungen nach einem der Ansprüche 1 bis 14.

16. Verfahren zum Herstellen einer Elastomerlegierung nach einem der Ansprüche 1 bis 14, **dadurch gekennzeichnet, dass** alle Komponenten direkt in einem Compounder/Knetextruder bei Temperaturen von maximal 170 bis 300 °C in einem einzigen Arbeitsschritt kontinuierlich zur Elastomerlegierung verarbeitet werden.

17. Verfahren nach Anspruch 16, **dadurch gekennzeichnet, dass** die Compoundier-Temperatur vorzugsweise bei 190 bis 200 °C für Legierungen ohne Faserzugabe und vorzugsweise bei 180 bis 230°C für Legierungen mit Fasern liegt.

18. Verfahren zum Herstellen einer Elastomerlegierung nach einem der Ansprüche 1 bis 14, **dadurch gekennzeichnet, dass** alle Komponenten über Waagen kontinuierlich in den Knetextruder dosiert werden.

19. Verfahren zum Herstellen einer Elastomerlegierung nach einem der Ansprüche 1 bis 14, **dadurch gekennzeichnet, dass** das Gummimehl ohne chemische Vorbehandlung eingesetzt wird.

20. Verfahren zum Herstellen einer Elastomerlegierung nach einem der Ansprüche 1 bis 14, **dadurch gekennzeichnet, dass** eine Gummimehlherstellung der Elastomerlegierungsherstellung in Linie vorangestellt ist.

## Claims

1. An elastomer alloy similar to thermoplastic elastomers, which comprises rubber meal manufactured of old tires or rubber waste, a main thermoplastic, and a dispersion agent or an emulsifier,
**characterised in that**
the share of the rubber meal is at least 30% to maximal 60%,
the rubber meal has a maximal particle size of 600 µm,
and is manufactured by way of a cold grinding method, and is not chemically pretreated.

2. An elastomer alloy according to claim 1, **characterised in that** the main thermoplastic is selected from the group of polyethylenes or polyurethanes.

3. An elastomer alloy according to claim 1 or 2, **characterised in that** the main thermoplast is a recycled regranulate.

4. An elastomer alloy according to one of the claims 1 to 3, **characterised in that** the main thermoplastic makes up a share of 20 to 70%, preferably 30 to 50%.

5. An elastomer alloy according to one of the claims 1 to 4, **characterised in that** the rubber meal makes up a share of more than 50%.

6. An elastomer alloy according to one of the claims 1 to 5, **characterised in that** the rubber meal has particle sizes of 100 to 600 µm, preferably 300 to 450 µm.

7. An elastomer alloy according to one of the claims 1 to 5, **characterised in that** the dispersion agent or the emulsifier is selected from the group ethylene-vinylacetate copolymer, PE-copolymers such as ethylene-butylacrylate copolymers (EBA) or ethylene-methylmethacrylate copolymers (EMA), PE-terpolymers such as glycidyl-methacrylate (GMA) or maleic acid anhydride (MAH).

8. An elastomer alloy according to claim 6, **characterised in that** the dispersion agent or the emulsifier makes up a share of 10 to 50%, preferably of 10 to 20%.

9. An elastomer alloy according to one of the preceding claims, **characterised in that** it comprises additives for compensating the physical and mechanical properties worsened by the rubber meal.

10. An elastomer alloy according to one of the preceding claims, **characterised in that** the elastomer alloy comprises fibres in a share of up to 30%, preferably 15 to 20%.

11. An elastomer alloy according to claim 10, **characterised in that** the fibres are selected from the group: glass-, Kevlar-, carbon fibres, or natural fibres of jute or cotton, or mixtures thereof.

12. An elastomer alloy according to claim 10, **characterised in that** the fibres comprise polyester fleece.

13. An elastomer alloy according to claim 11 or 12, **characterised in that** the fibres are present preferably in a length of 0.5 to 3 mm.

14. An elastomer alloy according to one of the claims 11 to 14, **characterised in that** the water content of the fibres is preferably below 0.1 %.

15. Semi-finished or finished products manufactured from elastomer alloys according to one of the claims 1 to 14.

16. A method for manufacturing an elastomer alloy according to one of the claims 1 to 14, **characterised in that** all components are processed directly in a compounder/kneading extruder at temperatures of maximal 170 to 300 °C in a single working step, continuously, into the elastomer alloy.

17. A method according to claim 16, **characterised in that** the compounder temperature lies preferably at 190 to 200 °C for alloys without the addition of fibre, and preferably at 180 to 230° for alloys with fibres

18. A method for manufacturing an elastomer alloy according to one of the claims 1 to 14, **characterised in that** all components are continuously metered into the kneading extruder via scales.

19. A method for manufacturing an elastomer alloy according to one of the claims 1 to 14, **characterised in that** the rubber meal is applied without chemical pre-treatment

20. A method for manufacturing an elastomer alloy according to one of the claims 1 to 14, **characterised in that** a rubber meal manufacture is set prior to the elastomer alloy manufacture.

## Revendications

1. Un alliage d'élastomères similaire d'élastomères thermoplastiques comprenant de la poudre de caoutchouc produite à partir de vieux pneus ou de déchets de caoutchouc, une matière thermoplastique principale et un agent de dispersion ou un émulsifiant,
**caractérisé en ce que**
le pourcentage de poudre de caoutchouc s'élève à au moins 30% et tout au plus à 60%,
la poudre de caoutchouc présente une taille maximale de particules de 600 µm
et est produit à l'aide d'une méthode de broyage à froid et n'a pas subi de traitement chimique préalable.

2. Alliage d'élastomères selon la revendication 1, **caractérisé en ce que** la matière thermoplastique principale est choisie parmi le groupe constitué de polyéthylène ou polyuréthane.

3. Alliage d'élastomères selon la revendication 1 ou 2, **caractérisé en ce que** la matière thermoplastique principale est un regranulé recyclé.

4. Alliage d'élastomères selon une des revendications de 1 à 3, **caractérisé en ce que** la matière thermoplastique principale constitue un pourcentage allant de 20 à 70%, de préférence de 30 à 50%.

5. Alliage d'élastomères selon une des revendications de 1 à 4, **caractérisé en ce que** la poudre de caoutchouc constitue un pourcentage de plus de 50%.

6. Alliage d'élastomères selon une des revendications de 1 à 5, **caractérisé en ce que** la poudre de caoutchouc présente des tailles de particules allant de 100 à 600 µm, de préférence de 300 à 450 µm.

7. Alliage d'élastomères selon une des revendication de 1 à 5, **caractérisé en ce que** l'agent de dispersion ou émulsifiant est choisi parmi le groupe constitué de copolymères d'éthylène et d'acétate de vinyle, copolymère de polyéthylène comme copolymère d'éthylène et d'acrylate de butyle (EBA) ou copolymère d'éthylène et de méthacrylate de méthyle (EMA), terpolymères de polyéthylène comme méthacrylate de glycidyle (GMA) ou anhydride d'acide maléique (MAH).

8. Alliage d'élastomères selon la revendication 6, **caractérisé en ce que** l'agent de dispersion ou émulsifiant constitue un pourcentage allant de 10 à 50%, de préférence de 10 à 20%.

9. Alliage d'élastomères selon une des revendications précédentes, **caractérisé en ce qu'**il comprend des additifs pour équilibrer les propriétés physiques et mécaniques dégradées par la poudre de caoutchouc.

10. Alliage d'élastomères selon une des revendications précédentes, **caractérisé en ce que** le alliage d'élastomères comprend des fibres dans un pourcentage allant jusqu'à 30%, de préférence de 15 à 20%.

11. Alliage d'élastomères selon la revendication 10, **caractérisé en ce que** les fibres sont choisies parmi les groupes constitués de fibres de verre, fibres de Kevlar, fibres de carbone ou des fibres naturelles composées de jute ou de coton ou des alliages de celles-ci.

12. Alliage d'élastomères selon la revendication 10, **caractérisé en ce que** les fibres comprennent du tissu à longs poils de polyester.

13. Alliage d'élastomères selon la revendication 11 ou 12, **caractérisé en ce que** les fibres sont présentes de préférence en une longueur de 0.5 à 3 mm.

14. Alliage d'élastomères selon une des revendications de 11 à 13, **caractérisé en ce que** la teneur en eau des fibres est située de préférence en dessous de 0.1 %.

15. Semi-produits et produits manufacturés produits à partir de alliages d'élastomères selon une des revendications de 1 à 14.

16. Méthode pour la production d'un alliage d'élastomères selon une des revendications de 1 à 14, **caractérisée en ce que** tous les composants sont directement traités dans un mélangeur / extrudeuse de malaxage par des températures de maximum 170 à 300°C en continue en une seule étape de travail pour la production du alliage d'élastomères.

17. Méthode selon la revendication 16, **caractérisée en ce que** la température du mélange se situe de préférence de 190 à 200°C pour des alliages sans addition de fibres et de préférence de 180 à 230°C pour des alliages avec fibres.

18. Méthode pour la production d'un alliage d'élastomères selon une des revendications de 1 à 14, **caractérisée en ce que** tous les composants sont continuellement dosés par des balances dans l'extrudeuse de malaxage.

19. Méthode pour la production d'un alliage d'élastomères selon une des revendications de 1 à 14, **caractérisée en ce que** la poudre de caoutchouc est employée sans traitement chimique préalable.

20. Méthode pour la production d'un alliage d'élastomères selon une des revendications de 1 à 14, **caractérisée en ce qu'**une production de poudre de caoutchouc est antéposée à la production du alliage d'élastomères dans une ligne de production.
